Europäisches Patentamt

**European Patent Office**

**Office européen des brevets**

(11) Numéro de publication: **0 272 956 B1**

# FASCICULE DE BREVET EUROPEEN

(45) Date de publication de fascicule du brevet: **19.02.92**  (51) Int. Cl.⁵: **H04L 5/04**

(21) Numéro de dépôt: **87402587.7**

(22) Date de dépôt: **17.11.87**

(54) **Système de transmission numérique à démodulation cohérente aménagé pour la transmission simultanée de deux messages binaires.**

(30) Priorité: **21.11.86 FR 8616257**

(43) Date de publication de la demande:
**29.06.88 Bulletin 88/26**

(45) Mention de la délivrance du brevet:
**19.02.92 Bulletin 92/08**

(84) Etats contractants désignés:
**DE GB IT**

(56) Documents cités:
**WO-A-85/05745**
**US-A- 3 885 105**
**US-A- 4 387 460**

(73) Titulaire: **THOMSON-CSF**
**51, Esplanade du Général de Gaulle**
**F-92800 Puteaux(FR)**

(72) Inventeur: **Girault, Jean**
**THOMSON-CSF SCPI 19, avenue de Messine**
**F-75008 Paris(FR)**
Inventeur: **Kantorowicz, Gérard**
**THOMSON-CSF SCPI 19, avenue de Messine**
**F-75008 Paris(FR)**

(74) Mandataire: **Turlèque, Clotilde et al**
**THOMSON-CSF SCPI**
**F-92045 PARIS LA DEFENSE CEDEX 67(FR)**

## Description

La présente invention concerne un système de transmission numérique à démodulation cohérente qui permet de transmettre simultanément sur un même canal deux débits d'informations binaires. Il s'applique avantageusement à la transmission simultanée de messages binaires situés dans la même bande de fréquence pour des systèmes de transmission hertzienne.

Le système est plus spécifiquement adapté à transmettre une première voie numérique de grand débit, par exemple des images de télévision numérisées dont le débit est de quelques mégabits par seconde et une deuxième voie numérique dont le débit est beaucoup plus lent, de l'ordre de quelques kilobits par seconde par exemple. Néanmoins, on se rendra compte que le système peut être utilisé également si les deux voies ont des débits différents mais du même ordre, ceci moyennant une réduction du débit.

Le brevet US 3.885.105 décrit un système d'émission et de réception de données à travers un canal de transmission binaire selon une méthode de multiplexage dans laquelle une pluralité de sources émettent des données sous la forme d'une séquence binaire codée par bit de donnée. Chaque source émettrice utilise une séquence binaire qui est propre à un récepteur. Ce dernier reconnaît sa propre séquence et en déduit, par corrélation, le message qui lui est adressé.

Ce système n'est cependant pas adapté à la transmission de deux messages simultanés par une même source en destination d'un seul récepteur.

Pour permettre en particulier un adressage du destinataire par code (CDMA = Code Division Multiple Access) des moyens peuvent être prévus pour élargir le spectre de fréquence à l'émission. Les techniques d'étalement de spectre à l'émission et à la réception ainsi que leurs avantages pour accroître la capacité de données transmises d'un câble de communication sont décrits dans la demande de brevet WO 85/05745. Le codage peut être obtenu à partir d'une séquence de modulation pseudo-aléatoire, le signal transmis ressemble alors fortement à un bruit de fond en raison de l'emploi d'un code pseudo-aléatoire et dans lequel le message à transmettre est dissimulé, sauf pour les récepteurs possédant une réplique du code pseudo-aléatoire et qui peuvent ainsi, par corrélation, extraire le message du signal reçu.

Le système ainsi équipé permet d'assurer par voie hertzienne une transmission numérique des deux messages avec un maximum de sûreté vers le seul destinataire prévu.

Selon l'invention, ce but est atteint dans un système émetteur-récepteur qui présente les caractéristiques techniques décrites dans ce qui suit, en particulier, un codage différentiel d'un premier message binaire à l'émission, un codage différentiel du deuxième message binaire de plus grand débit, la sommation de ces messages codés et leur application à un modulateur de phase 0-$\pi$ de la porteuse avant transmission à l'antenne d'émission, et à la réception, après transposition en fréquence intermédiaire, une démodulation cohérente différentielle pour reconstituer chacun des messages.

Les particularités et avantages de l'invention apparaîtront dans la description qui suit donnée à titre d'exemple, à l'aide des figures annexées qui représentent :
- Fig. 1, un schéma fonctionnel général d'un système émetteur-récepteur conforme à l'invention ;
- Fig. 2, des formes d'ondes de fonctionnement du système selon la figure 1 ;
- Fig. 3, des formes d'ondes illustrant un format préférentiel du message à grande débit de manière à éviter la prise en compte de bits erronés ;
- Fig. 4, un diagramme partiel relatif à des circuits de démodulation du récepteur ;
- Fig. 5, un exemple de réalisation d'un circuit démodulateur cohérent différentiel ;
- Fig. 6, un exemple de réalisation de la boucle d'acquisition du code pseudo-aléatoire à la réception, lorsqu'un tel code est utilisé à l'émission ;
- Fig. 7, un exemple de réalisation de la boucle de poursuite du code pseudo-aléatoire ;
- Fig. 8, un schéma partiel d'une variante de réalisation de la boucle d'acquisition de la figure 6.

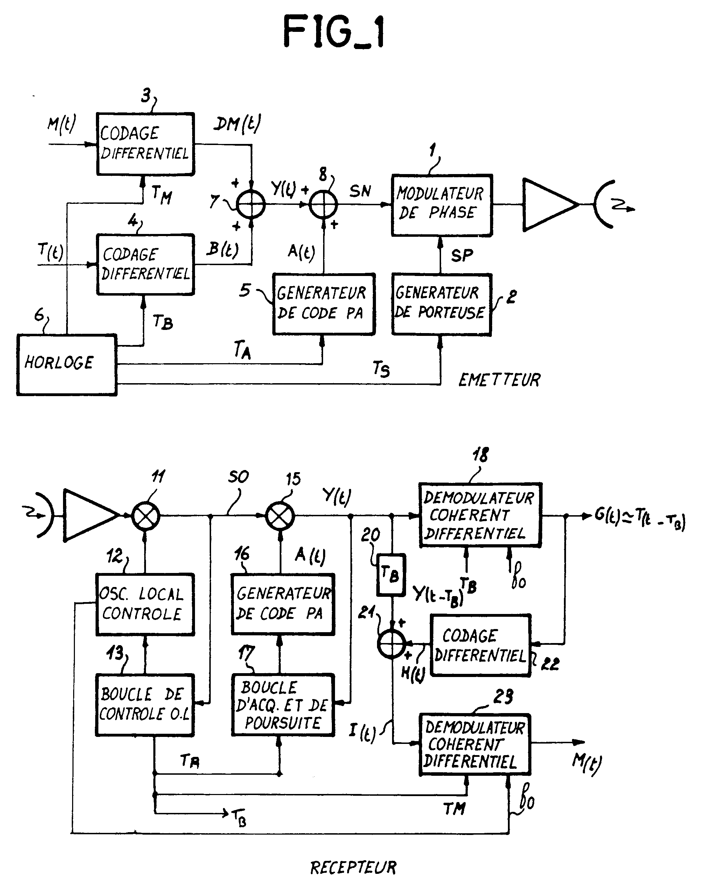

Le schéma fonctionnel d'un système de transmission hertzienne à bande élargie multiplexant deux voies numériques conformément à l'invention est, suivant une réalisation préférentielle , donné Fig.1. On distingue à la partie supérieure l'émetteur et à la partie inférieure le récepteur. La partie émission comporte un modulateur 1 pour moduler une porteuse SP à partir d'un signal numérique SN. Le modulateur 1 est du type à sauts de phase 0-$\pi$ (PSK selon la terminologie anglaise "Phase Shift Keying"). La porteuse haute fréquence SP est fournie par un circuit générateur 2. Une première voie à faible débit reçoit un message M(t). Le message est considéré sous forme binaire c'est-à-dire à deux états représentant les valeurs numériques "0" et "1". On indique par $T_M$ la période de bit de cette première voie. Une deuxième voie de plus grand débit reçoit un deuxième message T(t) également sous forme binaire et dont la période de bit $T_B$ est de préférence beaucoup plus faible que la période $T_M$ de la première voie. Des moyens annexes non représentés sont éventuellement utilisés pour produire ces deux messages sous forme binaire, par exemple lorsqu'ils sont reçus ou disponibles sous forme analogique. On considère a priori que la période $T_M$ est un multiple de la période $T_B$ suivant une relation de la forme $T_M = K_1 \cdot T_B$ - (avec $K_1$ entier supérieur à 1).

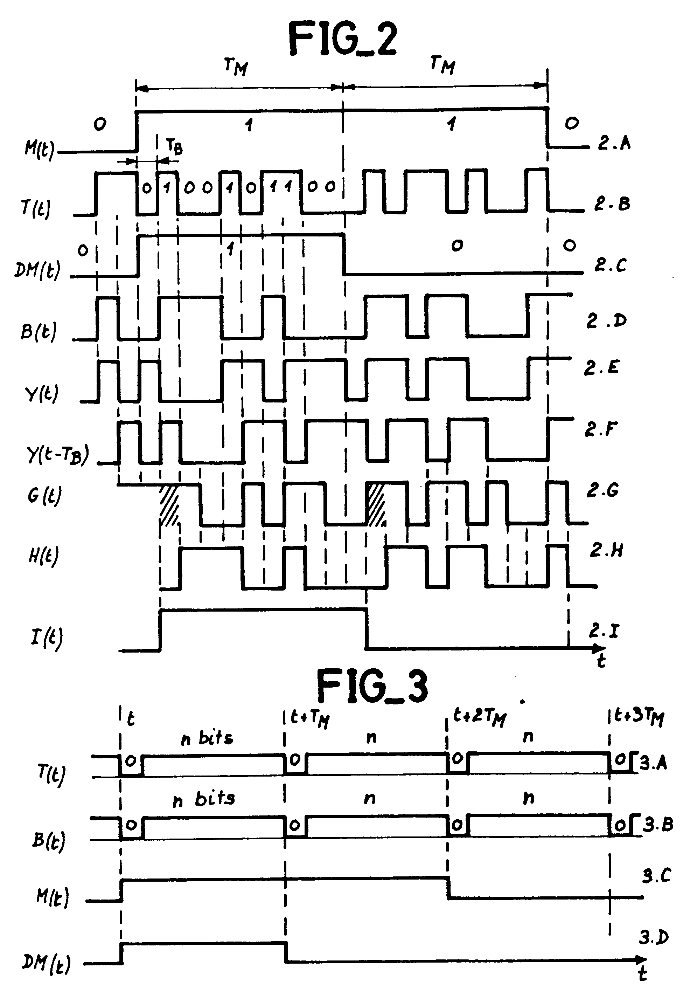

Un circuit de transcodage 3 est placé sur la première voie pour produire un codage différentiel du signal M(t) au format NRZ. Les formes d'onde Fig.2A et Fig.2C représentent les signaux correspondants M(t) et DM(t) ; le codage différentiel se traduit par une transition pour chaque bit "1", le bit "0" ne donnant pas de transition. Ce codage différentiel du message permet d'utiliser à la réception un démodulateur cohérent différentiel pour effectuer le décodage et restituer M(t).

La deuxième voie est traitée également par transcodage dans un circuit codeur différentiel 4. Les signaux d'entrée T(t) et de sortie B(t) sont représentés sur les formes d'onde Fig.2B et Fig.2D.

De manière préférentielle, en sorte d'accroître la protection contre les interférences, le système utilise un étalement de spectre par une séquence pseudo-aléatoire A(t) de période de bit $T_A$. Le rythme d'horloge de la séquence A(t) $R_A = 1/T_A$ est largement supérieur au rythme $R_M = 1/T_M$ et $R_B = 1/T_B$ des deux autres voies. Par souci de simplification on n'a pas considéré le signal A(t) sur les formes d'onde de la figure 2. On peut considérer par exemple que chaque période de bit $T_B$ est un multiple de la période $T_A$ d'un code pseudo-aléatoire $T_B = K_2 \cdot T_A$ avec $K_2$ entier supérieur à 1. Ainsi les périodes $T_M$ et $T_B$ sont des multiples entiers de la période $T_A$, et $T_M$ est un multiple entier de $T_B$. La séquence pseudo-aléatoire A(t) est fournie par un générateur de code 5.

Un circuit de base de temps, ou horloge, 6 élabore les synchronisations de bit $T_M$, $T_B$ et $T_A$ ainsi que la synchronisation $T_S$ du générateur de porteuse 2.

Un premier circuit 7 d'addition modulo-2 permet d'additionner les sorties des circuits de transcodage 3 et 4 pour produire le signal Y(t) (forme d'onde Fig.2E)

Un deuxième circuit 8 d'addition modulo-2, est utilisé pour additionner le signal Y(t) précité avec le signal pseudo-aléatoire A(t) lorsque le système est équipé du générateur 5. Le signal résultant constitue le signal numérique SN appliqué au modulateur 1. La sortie du modulateur est ensuite amplifiée en puissance et appliquée à une antenne émettrice de manière conventionnelle.

Du côté réception on distingue également une antenne et des circuits d'amplification et de filtrage avant d'attaquer un mélangeur 11 où le signal est mélangé avec une onde locale délivrée par un générateur 12 pour produire en sortie une onde à la fréquence intermédiaire, également appelée moyenne fréquence. Une boucle de synchronisation 13 permet de caler l'oscillateur local en fonction des variations éventuelles de la fréquence de la porteuse SP. Le récepteur comporte des circuits destinés à supprimer la modulation de phase rapide de rythme $R_A$. Ces circuits sont constitués par un deuxième mélangeur 15 interposé dans la chaîne entre le circuit de transposition moyenne fréquence 11 et les circuits de démodulation cohérente différentielle en aval. Un générateur de code pseudo-aléatoire 16, équivalent au générateur 5 de l'émetteur, et une boucle d'acquisition et de poursuite 17 permettent de reproduire localement par le générateur 16 la réplique exacte et en phase temporelle du code pseudo-aléatoire transmis par la liaison. On effectue ainsi une corrélation avec la séquence pseudo-aléatoire locale et l'on retrouve en sortie le signal Y(t) en fréquence intermédiaire.

La démodulation en aval comporte un premier démodulateur cohérent différentiel 18 qui effectue une démodulation sur la période $T_B$ sur le signal comprimé et transposé en moyenne fréquence et permet de restituer avec un décalage $T_B$ le message T(t) (signal G(t) forme d'onde Fig.2G) à l'exception des bits synchrones du début des bits du message M(t) lorsque ceux-ci représentent un "1", les deux bits correspondants restitués étant systématiquement faux (bits hachurés sur la Fig.2G).

La démodulation du premier message M(t) s'effectue ensuite en utilisant le signal Y(t) retardé d'une période de bit $T_B$ dans un élément de retard 29. La sortie correspondante (forme d'onde Fig.2F) est appliquée à un circuit 21 d'addition modulo 2, où elle est additionnée avec le signal H(t) (forme d'onde Fig.2H) résultant du codage différentiel du signal G(t) dans un circuit de transcodage 22. La sortie I(t) (forme d'onde Fig.2-1) du circuit 21 d'addition modulo-2, est appliquée au démodulateur cohérent différentiel 23 qui effectue une démodulation sur la période $T_M$ et permet de restituer le message M(t).

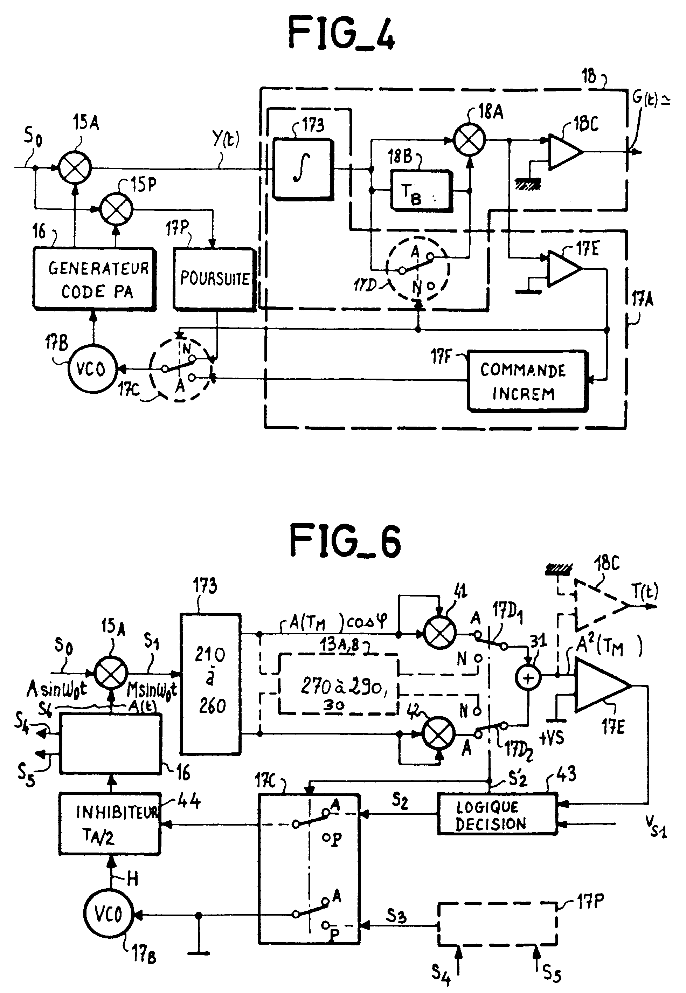

On peut éviter l'inconvénient des deux bits faux du signal G(t) (forme d'onde Fig.2G), à peu de frais lorsque le débit T(t) est beaucoup plus rapide que M(t), en introduisant systématiquement, d'une part, dans T(t) un bit supplémentaire représentant un "0" toutes les périodes $T_M$ (Fig.3A) et d'autre part, dans le codage différentiel de T(t) ce même bit "0" toutes les périodes $T_M$ (Fig.3B), cette deuxième opération permettant en outre de se définir périodiquement une référence pour le signal codé différentiel.

La figure 4 représente un diagramme simplifié des boucles d'acquisition et de poursuite 17 du code pseudo-aléatoire, et du démodulateur cohérent 18. Le mélangeur 15 est subdivisé en deux, un premier mélangeur 15A utilisé pour l'acquisition et un deuxième mélangeur 15P utilisé pour la poursuite. Les circuits de boucle qui suivent ces mélangeurs sont indiqués respectivement par les blocs 17A et 17P et vont commander successivement un oscillateur local 17B lequel cadence par sa sortie le générateur 16 de code PA à une période qui correspond, après action des boucles, à $T_A$ du signal reçu. Le générateur de code PA, comme le générateur 5 de l'émetteur, peut consister en un registre à décalage rebouclé sur lui-même avec des circuits d'addition modulo 2 dans les boucles selon des techniques connues. La boucle d'acquisition 17A, 17B est destinée à positionner temporellement la séquence locale qui est identique à la séquence reçue, avec une précision au moins égale à ± $T_A/2$ par rapport à cette dernière. Ceci étant atteint, le circuit d'acquisition commande alors un circuit de commutation 17C qui connecte la boucle de poursuite 17P à l'oscillateur 17B à la place de la boucle d'acquisition 17A. La boucle de poursuite 17P affine l'asservissement et maintient le calage temporel du code pseudo-aléatoire local fourni par le circuit 16 relativement au code pseudo-aléatoire reçu transporté par le signal $S_o$ appliqué aux mélangeurs 15A et 15P. Le circuit démodulateur cohérent différentiel 18 peut être formé comme on le verra dans la description ultérieure avec des circuits d'entrée, notamment un intégrateur, communs à ceux de la boucle d'acquisition 17A. Dans ces conditions il reçoit le signal Y(t) de la sortie du mélangeur 15A à travers les circuits communs 173. Le circuit 18 est ensuite symbolisé par un circuit multiplicateur 18A et un circuit de retard 18B qui retarde le signal d'une période $T_B$. Le signal d'entrée étant multiplié avec ce même signal retardé d'une période et le résultat étant comparé à zéro dans un comparateur 18C. En effet, compte tenu du transcodage différentiel effectué à l'émission le produit G(t) en sortie du comparateur à zéro 18C à sortie numérique permet de restituer les bits du message T(t). Le circuit de commutation 17D met en service après acquisition le circuit de retard 18B sur la voie de démodulation cohérente ce qui correspond au fonctionnement normal référencé "N". Les circuits principaux de la voie acquisition en aval du circuit multiplicateur 18A sont symbolisés par un comparateur à seuil 17E et par un circuit logique 17F de commande incrémentale de l'oscillateur 17B.

La boucle de contrôle 13 permet de commander l'accord de l'oscillateur local 12 et d'autre part elle restitue les signaux de synchronisation de bit $T_M, T_A$ et $T_B$. Ces signaux sont appliqués aux circuits 18, 23 et 17 pour en assurer leur synchronisation.

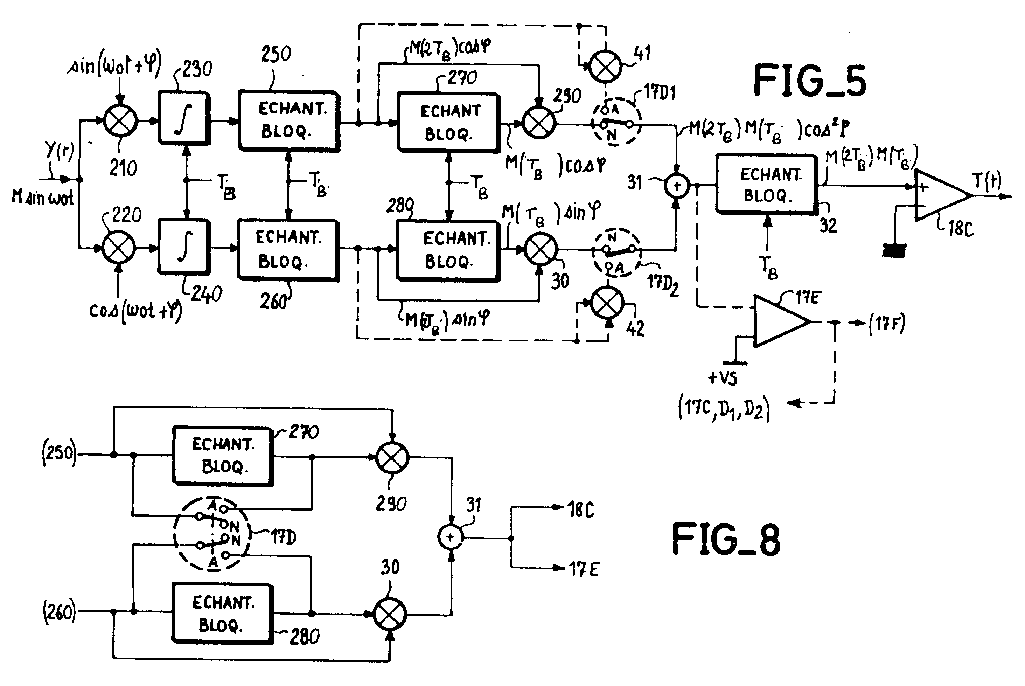

La figure 5 représente un diagramme général du démodulateur cohérent différentiel 18 (ou 23).

Le signal Y(t) appliqué à l'entrée de ce circuit provient, soit du mélangeur de transposition 11 lorsqu'on n'utilise pas le générateur de code pseudo-aléatoire 5 à l'émission, soit du mélangeur 15 lorsque le codage pseudo-aléatoire est utilisé. Dans ce dernier cas, la démodulation s'effectue sur un signal comprimé ce qui ne change en rien le fonctionnement du démodulateur. Le signal Y(t) est constitué par une onde sinusoïdale à la fréquence $f_o$ de transposition. Il peut s'écrire sous la forme M $\sin\omega_o t, \omega_o$ étant la pulsation correspondant à la fréquence $f_o$. Le coefficient M peut prendre la valeur +1 ou -1 selon le codage 0 ou $\pi$ correspondant effectué par le circuit modulateur 1 à l'émission. Après transposition de fréquence en 11 à la réception on retrouve un signal moyenne fréquence et on constate bien que l'expression précitée pour le signal Y(t) s'applique avec une amplitude multipliée par un coefficient +1 ou -1 selon l'état "1" ou "0" du signal SN de modulation.

Le démodulateur comporte deux voies dans lesquelles ce signal est mélangé avec l'onde locale de fréquence $f_o$ issue de l'oscillateur local 12 ce mélange s'effectuant en quadrature de phase, c'est-à-dire que pour l'un des mélangeurs 210 l'onde locale est de la forme sin ($\omega_o t + \phi$) par exemple, et pour l'autre mélangeur 220 elle est de la forme cos ($\omega_o t + \phi$). La valeur $\phi$ représente le déphasage entre l'onde S1 et ces ondes locales. On a considéré pour simplifier que le glissement de fréquence est nul et que la fréquence locale $f_o$ est bien égale à la fréquence du signal S1. Les sorties des mélangeurs sont appliquées respectivement à des intégrateurs 230 et 240 qui sont remis à zéro à la période d'un bit, c'est-à-dire $T_B$. Les sorties d'intégration sont appliquées ensuite aux échantillonneurs-bloqueurs 250 et 260 qui sont cadencés à la même période de bit avec un très léger décalage par rapport à l'intégrateur pour prélever la valeur l'intégration correspondante à la fin de la période de bit considérée. A la suite de ces premiers échantillonneurs-bloqueurs (appelés Sample and Hold en terminologie anglo-saxonne) la valeur stockée à l'instant $T_B$ est prise en compte par un autre échantillonneur-bloqueur, respectivement 270 et 280. Les sorties des échantillonneurs 270 et 280 sont appliquées respectivement aux circuits multiplicateurs 290 et 30 qui reçoivent par leur deuxième entrée directement la sortie des premiers étages échantillonneurs 250 et 260. Les échantillonneurs 270 et 280 sont synchronisés à la période de bit $T_B$ et jouent ainsi le rôle d'un élément de retard de valeur $T_B$ entre la première et la deuxième moitié du bit. A l'instant $t_o + 2T_B$ on retrouve à la sortie du circuit 270 la valeur intégrée au cours de la première période de bit que l'on désigne par M($T_B$) cette valeur étant également multipliée par le cosinus du déphasage $\phi$. Du côté

circuit 280 la sortie correspond, de manière équivalente, à l'expression $M(T_B)$ sin $\phi$. Au même instant $t_o + 2T_B$ la sortie des échantillonneurs-bloqueurs 250 et 260 qui est appliquée directement aux multiplicateurs 290 et 30 correspond à la valeur intégrée durant la deuxième période de bit que l'on décrit sous la forme $M(2T_B)$ cos $\phi$ pour la branche supérieure et $M(2T_B)$ sin $\phi$ pour la branche inférieure. La multiplication en 29 et 30 permet d'élever au carré les coefficients cos $\phi$ et sin $\phi$ et l'addition faite ensuite dans le circuit 31 permet d'éliminer le déphasage $\phi$ . En sortie du circuit d'addition 31 on trouve le produit $M(2T_B)$. $M(T_B)$ qui représente les valeurs intégrées au cours de la première et deuxième périodes du bit considéré. On a fait abstraction dans la description de ce fonctionnement du code PA qui se trouve en fait éliminé par la corrélation en 15.

Compte tenu du codage différentiel effectué à l'émission avant modulation 0 - $\pi$, on se rend bien compte que la sortie de l'additionneur 31 a pour valeur -1 lorsque le bit du message à transmettre $T_t$ correspond à un bit de valeur "1" et que ce produit est égal à + 1 si le bit à transmettre a pour valeur "0". En conséquence, le circuit de décision qui restitue le message peut être constitué par le comparateur à zéro à sortie numérique 18C. Pour ne prendre en compte les sorties des multiplicateurs 290 et 30 et la sortie de l'additionneur 31 qu'à la fin de chaque période $T_B$, un circuit échantillonneur-bloqueur 32 est interposé dans la chaîne et cadencé à cette période.

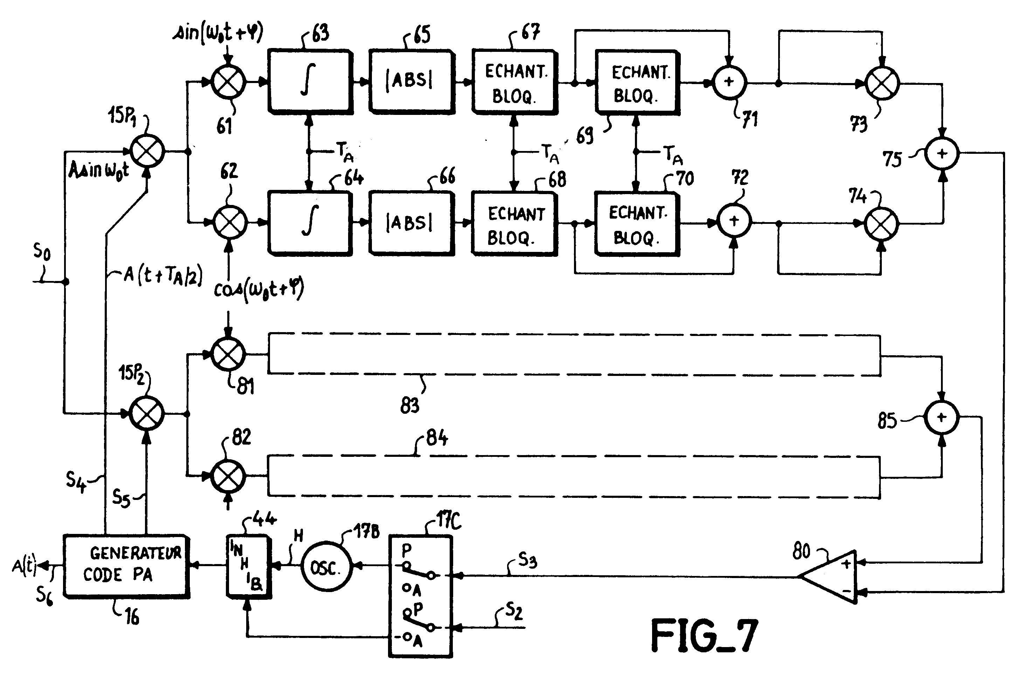

Les figures 6 et 7 se rapportent à l'acquisition et à la poursuite du code pseudo-aléatoire A(t). La figure 6 représente une réalisation possible du circuit 17A d'acquisition. Les circuits 173 communs avec le démodulateur cohérent 18 comprennent les circuits 210 à 260 de la figure 5 précédente; les interrupteurs 17D1 et 17D2 sont sur la position acquisition indiquée par la lettre "A". On désigne par A(t) la séquence pseudo-aléatoire fournie par le générateur de code 16 et par A sin$\omega_o$t le signal de fréquence $f_o$ issu du mélangeur 11 ces signaux étant appliqués aux mélangeurs corrélateurs 15A ; le paramètre A présente la valeur + 1 ou -1 selon le bit "1" ou "0" du codage pseudo-aléatoire (Figs. 2-F et 2-G). Cette bouche d'acquisition se présente de manière similaire au circuit de démodulation comportant deux voies où les circuits 270 à 290 et 30 sont remplacés par les mélangeurs de multiplication 41 et 42. Les sorties de ces circuits multiplicateurs 41 et 42 sont appliquées au circuit d'addition 31 ce dernier étant suivi du circuit de comparaison 17E à seuil positif. Les sorties integrées A-$(T_M)$ cos $\phi$ et $A(T_M)$ sin $\phi$ respectivement sont multipliées par elles-mêmes dans les circuits 41 et 42 pour élever au carré les facteurs cos $\phi$ et sin $\phi$ et pour retrouver en sortie de l'additionneur 31 la

valeur $A^2(T_M)$ correspondant à la période de bit considérée. Cette valeur est comparée à un seuil positif déterminé + VS en sorte d'éliminer les signaux parasites de bruit. La sortie du comparateur 17E commande de manière connue, par l'intermédiaire d'un circuit de décision logique 43; l'oscillateur 17B de manière à agir par incrément, de préférence de valeur égale à une demi-période $T_A/2$ du code PA, sur la sortie de l'oscillateur qui constitue l'horloge H de synchronisation du générateur 16 de code pseudo-aléatoire. Le rattrapage s'effectue ainsi dans le sens désiré jusqu'à ce que le signal en sortie de l'additionneur 31 devienne inférieur au seuil + VS fixé et que le calage de la boucle se trouve dans la plage $\pm T_A/2$ près. Une première sortie numérique du circuit logique de décision 43 produit la commande de l'oscillateur 17B au moyen d'un circuit d'inhibition incrémental 44 interposé sur la sortie allant de l'oscillateur 17B au générateur de sauts de fréquence 16.

Le fonctionnement des circuits 43 et 44 peut être le suivant. Le circuit logique 43 compare la valeur absolue de la sortie 17E à un seuil de référence VS1 ; tant que ce seuil n'est pas atteint, à des instants successifs correspondant au moins à la durée de code $T_A$ la sortie 52 commande le décalage $T_A/2$ par le circuit 44 du signal d'horloge H délivré par l'oscillateur 17B. Les instants précités sont de préférence distants d'un nombre entier de fois $T_A$ par exemple deux ou trois fois $T_A$, pour éviter les fausses acquisitions. Lorsque le seuil VS1 est dépassé, le calage d'acquisition est effectué dans la plage désirée, et une deuxième sortie S'2 du circuit logique 43 commande les circuits de commutation 17C, 17D1 et 17D2, provoquant la mise en marche de la boucle de poursuite 17P, l'arrêt de la boucle d'acquisition 17A et la mise en marche du démodulateur cohérent 13.

On se reporte maintenant à la figure 7 qui représente la boucle de poursuite du code pseudo-aléatoire. Le signal $S_o$ est appliqué à deux mélangeurs 15P1 et 15P2 qui reçoivent respectivement le signal $A_{(t)}$ décalé de $\pm$ une demi-période $T_A/2$. Ces signaux sont prélevés sur des sorties complémentaires S4 et S5 du générateur de code pseudo-aléatoire 16 qui délivre par la sortie S6 le signal $A_{(t)}$ de la voie d'acquisition. La sortie de chacun de ces mélangeurs est appliquée à deux voies en parallèle analogues à celles déjà décrites à l'aide de la figure 5, avec des mélangeurs cohérents à l'entrée, par exemple 61 et 62 pour la sortie du mélangeur 15P1. Chacun des mélangeurs est suivi de circuits en série groupant, par exemple pour la voie issue du mélangeur 61, un intégrateur 63, un circuit 65 qui permet d'éliminer le signe de l'intégration et de n'en prendre que la valeur absolue, un premier circuit échantillonneur-bloqueur 67, un deuxième circuit échantillonneur-bloqueur 69, un additionneur 71 et un circuit multiplicateur 73. Le circuit 65 peut être réalisé par exemple au moyen d'un comparateur à zéro et d'un circuit inverseur mis en service lorsque le signal est négatif. L'ensemble circuit 69 et additionneur 71 permet d'obtenir une intégration complète sur la période $T_A$ de bit. La sortie du deuxième mélangeur 15P2 est de même appliquée à deux voies en quadrature de phase avec deux mélangeurs d'entrée 81, 82. Les blocs 83 et 84 correspondent chacun à une succession telle que les circuits 63 à 74. Les sorties des additionneurs 75 et 85 sont comparées dans un circuit 80 et la différence S3 permet à travers le commutateur 17C fermé sur la position poursuite "P", de commander l'oscillateur contrôlé de manière progressive pour effectuer un rattrapage continu et fin du décalage temporel restant entre la séquence pseudo-aléatoire locale $A_{(t)}$, et celle incluse dans le signal reçu $S_o$ transposé.

La réalisation des boucles d'acquisition et de poursuite est donnée à titre indicatif. On notera, par exemple, que la réalisation de la boucle d'acquisition peut être encore aménagée différemment en utilisant les mélangeurs 290 et 30 à la place des mélangeurs 41 et 42 ; ceci peut être obtenu en déplaçant les commutateurs 17D1 et 17D2 sur les liaisons parvenant aux circuits échantillonneurs 270 et 280 ou sur les connexions directes allant des échantillonneurs 250 et 260 aux mélangeurs 290 et 30 respectivement, ou encore comme indiqué sur la Fig. 8 en utilisant des commutateurs 17D pour court-circuiter les échantillonneurs-bloqueurs 270 et 280 durant la phase d'acquisition.

**Revendications**

1. Système de transmission numérique pour la transmission simultanée de deux messages, le système disposant d'un émetteur comportant des moyens de transcodage (3, 4) des messages, et d'un récepteur comportant un circuit de retard (20) de durée $T_B$, le système étant caractérisé en ce que :
   - les deux messages sont constitués d'un premier message binaire M(t) de période $T_M$, et d'un deuxième message binaire T-(t) de période $T_B$ inférieure à $T_M$ et sous-multiple de $T_M$ ;
   - les moyens de transcodage (3, 4) effectuent un codage différentiel des messages M(t) et T(t) ;
   - l'émetteur comporte un circuit d'addition modulo-2 (7) des deux messages transcodés pour obtenir un signal de modulation SN et un modulateur d'une onde porteuse SP avec ledit signal SN ;
   - le récepteur comporte en outre :
   - un mélangeur (11) pour transposer le signal reçu avec une onde d'oscillation locale (12), et dont la sortie est appliquée au circuit de retard (20) ;
   - un premier circuit démodulateur cohérent différentiel (18) recevant la sortie du mélangeur (11) et effectuant une démodulation sur la période $T_B$ pour restituer sensiblement T(t) ;
   - un circuit de codage différentiel (22) qui reçoit le message T(t) restitué ;
   - un circuit d'addition modulo-2 (21) qui reçoit la sortie du circuit de retard (20) et du circuit codeur différentiel (22), et qui alimente un deuxième circuit démodulateur cohérent différentiel (23) effectuant une démodulation sur la période $T_M$ pour restituer M(t).

2. Système selon la revendication 1, caractérisé en ce qu'il comporte, en outre :
   - à l'émission, des moyens d'élargissement du spectre (5) avec un deuxième circuit d'addition modulo-2 (8) pour additionner la sortie dudit circuit d'addition modulo-2 avec un code pseudo-aléatoire de période $T_A$ sous-multiple entier de la période $T_B$, la sortie de ce deuxième circuit d'addition constituant le signal de modulation (SN) ;
   - et à la réception, un deuxième mélangeur (15) constituant un corrélateur qui reçoit par une première entrée le signal transposé issu dudit mélangeur (11) et par une deuxième entrée un code pseudo-aléatoire local issu d'un générateur (16), ledit générateur étant contrôlé par des circuits boucles d'acquisition et de poursuite (17).

3. Système selon la revendication 2, caractérisé en ce que la boucle d'acquisition (17A) et le premier circuit démodulateur cohérent différentiel (18) comportent des circuits d'entrée communs (173) dans lesquels le signal transposé est intégré sur une période de bit, la partie restante du démodulateur comportant un circuit multiplicateur (18A), et un circuit de retard (18B) pour multiplier ce signal transposé et intégré sur un bit avec le signal transposé et intégré sur le bit précédent, ceci pour chaque période de bit (TB) considérée, le résultat étant appliqué à un comparateur à zéro (18C) qui restitue le message binaire G(t).

4. Système selon la revendication 3, caractérisé en ce que les circuits communs comportent deux voies alimentées en parallèle par ledit signal transposé, et comportant successivement, pour chaque voie, un mélangeur (210, 220) pour faire battre cette onde d'entrée avec une onde locale, puis un circuit intégrateur (230, 240) suivi d'un circuit échantillonneur-bloqueur (250, 260), les mélangeurs étant alimentés par des ondes locales de même fréquence mais en quadrature de phase, le circuit de démodulation cohérente comportant ensuite, un échantillonneur-bloqueur pour chaque voie (270, 280) suivi d'un mélangeur (290, 30) recevant par une deuxième entrée le signal d'entrée de l'échantillonneur associé, les sorties de ces derniers mélangeurs étant appliqués à un circuit d'addition (31) lequel alimente à travers un circuit d'échantillonneur-bloqueur (32) un circuit de comparaison à zéro (18C).

5. Système selon la revendication 4, caractérisé en ce que la boucle d'acquisition est obtenue en connectant la sortie des circuits communs (173) à deux mélangeurs respectivement pour multiplier le signal par lui-même (41, 42), les sorties de ces mélangeurs étant appliquées auxdits circuits d'addition (31) dont la sortie est appliquée à un comparateur à seuil (17E) connecté à un circuit de commande incrémental (17F) d'un oscillateur local (17B) qui synchronise le générateur local de code pseudo-aléatoire (16).

6. Système selon la revendication 5, caractérisé en ce qu'il comporte, à la réception, des circuits de commutation (17C, 17D) pour commuter la boucle de poursuite à la place de la boucle d'acquisition après acquisition, et pour connecter lesdits circuits communs (173) à la partie restante du circuit démodulateur cohérent (18) après acquisition.

## Claims

1. A digital transmission system for the simultaneous transmission of two messages, the system including a transmitter comprising message transcoding means (3, 4), and a receiver comprising a delay circuit (20) of a duration $T_B$, characterized in that
   - the two messages are constituted by a first binary message M(t) of a period $T_M$ and a second binary message T(t) of a period $T_B$, $T_B$ being smaller than $T_M$ and a sub-multiple of $T_M$;
   - the transcoding means (3, 4) perform a differential encoding of the messages M(t) and T(t);
   - the transmitter comprises a modulo-2 adder circuit (7) for adding the two transcoded messages and for obtaining a modulation signal SN, and a modulator for modulating a carrier wave SP with the signal SN;
   and that the receiver further comprises:
   - a mixer (11) intended to transpose the received signal with a local oscillation wave (12), the output of the mixer being applied to the delay circuit (20);
   - a first differential coherent demodulator circuit (18) receiving the mixer output (11) and performing a demodulation over the period $T_B$ in order to substantially restore T(t);
   - a differential encoder circuit (22) which receives the restored message T(t);
   - a modulo-2 adder circuit (21) which receives the output of the delay circuit (20) and of the differential encoder circuit (22) and which supplies its output signal to a second differential coherent demodulator circuit (23) for performing a demodulation over the period $T_M$ in order to restore M(t).

2. A system according to claim 1, characterized in that it further comprises:
   - at the transmission side, spectrum extension means (5) including a second modulo-2 adder circuit (8) for adding the output of said modulo-2 adder circuit to a pseudo-random code of a period $T_A$, this period being a sub-multiple integer of the period $T_B$, the output of the second adder circuit constituting the modulation signal (SN);
   - and at the reception side, a second mixer (15) constituting a correlator which receives through a first input the transposed signal supplied by said mixer (11) and through a second input a pseudo-random local code supplied by a generator (16), said generator being controlled by circuits of the type acquisition and follow-up loop (17).

3. A system according to claim 2, characterized in that the acquisition loop (17A) and the first differential coherent demodulator circuit (18) comprise common input circuits (173) in which the transposed signal is integrated over a period of one bit, the remaining part of the demodulator comprising a multiplier circuit (18A) and a delay circuit (18B) intended to multiply this transposed and over one bit integrated signal with the preceding transposed and over one bit integrated signal, this being made for each bit period (TB) under consideration, the result being applied to a zero comparator (18C) which restores the binary message G(t).

4. A system according to claim 3, characterized in that the common circuits comprise two channels to which said transposed signal is supplied in parallel, each channel comprising in succession a mixer (210, 220) in order to make this input wave beat a local wave, then an integrator circuit (230, 240) followed by a sample-and-hold circuit (250, 260), the mixers being supplied with local waves of identical frequency but in quadrature phase relationship, the coherent demodulation circuit comprising further a sample-and-hold circuit for each channel (270, 280) followed by a mixer (290, 30) which receives by a second input the input signal of the associated sampling circuit, the outputs of the last mentioned mixers being applied to an adder circuit (31) which supplies its output signal to a zero comparison circuit (18C) through a sample-and-hold circuit (32).

5. A system according to claim 4, characterized in that the acquisition loop is obtained by connecting the output of the common circuits (173) to two mixers respectively in order to multiply the signal by itself (41, 42), the outputs of these mixers being applied to said adder circuits (31) whose output is applied to a threshold comparator (17E) connected to an incremental control circuit (17F) of a local oscillator (17B) which synchronizes the local pseudo-random code generator (16).

6. A system according to claim 5, characterized in that it comprises at the reception side switch circuits (17C, 17D) conceived to switch the follow-up loop instead of the acquisition loop after acquisition and to connect the common circuits (173) to the remaining part of the coherent demodulator circuit (18) after acquisition.

**Patentansprüche**

1. Digitales Übertragungssystem für die gleichseitige Übertragung von zwei Nachrichten, mit einem Sender, der Mittel (3, 4) zum Umkodieren der Nachrichten aufweist, und mit einem Empfänger, der einen Verzögerungskreis (20) um die Dauer $T_B$ besitzt, dadurch gekennzeichnet, daß
   - die beiden Nachrichten aus einer ersten binären Nachricht M(t) der Periode $T_M$ und einer zweiten binären Nachricht T(t) der Periode $T_B$ bestehen, wobei $T_B$ kleiner als $T_M$ und ein Untervielfaches von $T_M$ ist;
   - die Umkodiermittel (3, 4) eine Differentialkodierung der Nachrichten M(t) und T(t) bewirken;
   - der Sender einen Modulo-2-Addierkreis (7) zum Addieren der beiden umkodierten Nachrichten, um ein Modulationssignal SN zu erhalten, und einen Modulator aufweist, der eine Trägerwelle SP mit dem Signal SN moduliert;
   und daß der Empfänger außerdem aufweist:
   - eine Mischstufe (11), um das empfangene Signal mit einer örtlichen Schwingung (12) umzusetzen, wobei der Ausgang der Mischstufe an den Verzögerungskreis (20) führt;
   - einen ersten kohärenten Differentialdemodulatorkreis (18), der das Ausgangssignal der Mischstufe (11) zugeführt erhält und eine Demodulation über der Periode $T_B$ durchführt, um im wesentlichen T(t) wiederzugewinnen;
   - einen Differentialkodierkreis (22), der die wiedergewonnene Nachricht T(t) zugeführt erhält;
   - einen Modulo-2-Addierkreis (21), der den Ausgang des Verzögerungskreises (20) und der Ausgang des Differentialkodierkreises (22) zugeführt erhält und der einen zweiten kohärenten Differentialdemodulatorkreis (23) speist, welcher eine Demodulation über der Periode $T_M$ zur Wiedergewinnung von M(t) durchführt.

2. System nach Anspruch 1, dadurch gekennzeichnet, daß es außerdem aufweist:
   - auf der Sendeseite Mittel (5) zur Erweiterung des Spektrums mit einem zweiten Modulo-2-Addierkreis (8), um den Ausgang des Modulo-2-Addierkreises mit einem Pseudozufallskode einer Periode $T_A$ zu addieren, die ein ganzzahliges Untervielfaches der Periode $T_B$ ist, wobei der Ausgang dieses zweiten Addierkreises das Modulationssignal (SN) bildet;
   - und auf der Empfangsseite eine zweite Mischstufe (15), die einen Korrelator bildet, welcher über einen ersten Eingang das von der Mischstufe (11) kommende umgesetzte Signal und über einen zweiten Eingang einen örtlichen Pseudozufallskode von einem Generator (16) empfängt, wobei dieser Generator durch Kreise vom Typ Aquisitions- und Verfolgungsschleife (17) kontrolliert wird.

3. System nach Anspruch 2, dadurch gekennzeichnet, daß die Aquisitionsschleife (17A) und der erste kohärente Differentialdemodulatorkreis (18) gemeinsame Eingangskreise (173) besitzen, in denen das umgesetzte Signal über eine Bitperiode integriert wird, wobei der restliche Teil des Demodulators einen Multiplizierkreis (18A) und einen Verzögerungskreis (18B) enthält, um das umgesetzte und über ein Bit integrierte Signal mit dem vorhergehenden umgesetzten und über ein Bit integrierten Signal zu multiplizieren, und zwar für jede betrachtete Bitperiode (TB), wobei das Resultat an einen Nullkomparator (18C) angelegt wird, der die binäre Nachricht G(t) wiedergewinnt.

4. System nach Anspruch 3, dadurch gekennzeichnet, daß die gemeinsamen Kreise zwei parallel von dem umgesetzten Signal gespeiste Kanäle aufweisen, die je nacheinander eine Mischstufe (210, 220), um diese Eingangswelle mit einer lokalen Welle schweben zu lassen, dann einen Integratorkreis (230, 240) gefolgt von einem Tast- und Haltekreis (250, 260) aufweisen, wobei die Mischstufen von lokalen Wellen der gleichen Frequenz, aber in Phasenquadratur gespeist werden und der kohärente Demodulationskreis daran anschließend für jeden Kanal einen Tast- und Haltekreis (270, 280) gefolgt von einer Mischstufe (290, 30) aufweist, die über einen zweiten Eingang das Eingangssignal des zugeordneten Tastkreises empfängt, wobei die Ausgänge dieser letztgenannten Mischstufen an einen Addierkreis (31) angelegt werden, der über einen Tast- und Haltekreis (32) einen Nullwert-Komparatorkreis (18C) speist.

5. System nach Anspruch 4, dadurch gekennzeichnet, daß die Aquisitionsschleife dadurch erhalten wird, daß man den Ausgang der gemeinsamen Kreise (173) an zwei Mischstufen anschließt, um das Signal mit sich selbst zu multiplizieren (41, 42), wobei die Ausgänge dieser Mischstufen an die Addierkreise (31) angelegt sind, deren Ausgang an einen Schwellwertkomparator (17E) angelegt ist, wobei letzterer an einen Inkrementsteuerkreis (17F) eines örtlichen Oszillators (17B) angeschlossen ist, der den örtlichen Pseudozufallskodegenerator (16) synchronisiert.

6. System nach Anspruch 5, dadurch gekennzeichnet, daß es auf der Empfangsseite Schaltkreise (17C, 17D) aufweist, um die Folgeschleife anstelle der Aquisitionsschleife nach Aquisition einzuschalten und um die gemeinsamen Kreise (173) an den restlichen Bereich des kohärenten Demdodulatorkreises (18) nach der Aquisition anzuschließen.

EP 0 272 956 B1

# FIG_1

EMETTEUR

RECEPTEUR

# FIG_2

# FIG_3

# FIG_4

# FIG_6

FIG_5

FIG_8

FIG_7